# EUROPEAN PATENT APPLICATION

(11) **EP 2 608 534 A1**
(43) Date of publication of application: **26.06.2013**
(21) Application number: 12179528.0
(22) Date of filing: 07.08.2012
(51) Int. Cl.: H04N 5/76, H04N 21/8405, H04N 21/436, H04N 21/45, H04N 21/466, H04N 21/442

(54) **Update of television program user preferences based on communication data.**

(30) Priority: 22.12.2011 JP 2011281970
(71) Applicant: Kabushiki Kaisha Toshiba, Tokyo 105-8001 (JP)
(72) Inventor: Kataoka, Hideo, Tokyo 105-8001 (JP); Toma, Hideyuki, Tokyo 105-8001 (JP)
(74) Representative: Henkel, Breuer & Partner

(57) **Abstract**

According to one embodiment, a program-to-weighting value storage unit (213) stores weighting value of preference for program. A preference information generation unit (214) sets a level of preference corresponding to the weighting value for the program. A weighting value correction unit (212) adds or subtracts a correction value with respect to the weighting value to correct the weighting value for the program. A data collection and correction value generation unit (211) collects communication data via radio or wire and generates the correction value according to key data included in the communication data.

## Description

Embodiments described herein relate generally to an information playback apparatus and a control method thereof.

An information playback apparatus such as a television receiver apparatus, disk recording/playback apparatus or the like has a function of receiving a broadcasting program signal and recording the same on a recording medium. An apparatus having a plurality of tuners has a function of simultaneously recording broadcasting program signals of a plurality of channels on a recording medium. Further, it also has a function of recording a broadcasting program signal received based on reserved program data for recording on a recording medium.

When a broadcasting program signal is selected for recording or viewing the broadcasting program signal, preference information is used. For example, preference information is information used for providing, for example, a recommendable program list estimated based on the preference of the user who uses the information playback apparatus. As a method for forming preference information, various types of methods have conventionally been proposed.

If an attempt is made to precisely manage the preference of the user, it becomes necessary for the user to perform an operation of positively emphasizing the preference. In order to emphasize the preference, for example, it is necessary to construct means for registering a favorite performer, program name and the like as key data and extracting a program including the key data as a recommendable program.

However, since the behavior of the user is dispersed, the real preference cannot be estimated based only on the behavior for a preset device (for example, a television device in a home). That is, the behavior of the user is not performed only for the preset device.

Further, the human behavior includes a behavior having no clear object. For example, the user behavior that turns on the television device and simply sets the same in a program receiving state without a particular object is not suitable as a factor of emphasizing the behavior of the user.

A general architecture that implements the various features of the embodiments will now be described with reference to the drawings. The drawings and the associated descriptions are provided to illustrate the embodiments and not to limit the scope of the invention.
FIG. 1 is a block diagram of an exemplary configuration in accordance with an exemplary embodiment.
FIG. 2 is a diagram of an exemplary internal function (internal block) of a control device illustrated in FIG. 1.
FIG. 3 is an operation-illustrating diagram showing an example of determining a weighting value for a program to create preference information.
FIG. 4 is a diagram of an exemplary block configuration of a portable terminal.
FIG. 5 is a diagram of an exemplary configuration that can commit creation of preference information (recommendable information) for each portable terminal to an external server.

Various embodiments will be described hereinafter with reference to the accompanying drawings.

In general, according to one embodiment, there are provided an information playback apparatus and a control method thereof that can create adequate preference information for a user. Further, there are provided an information playback apparatus and a control method thereof that can set up more precise preference information by collecting information items that cross an apparatus, equipment and service.

According to an embodiment of the present disclosure, a program-to-weighting value storage unit 213 stores weighting values of preferences for programs. A preference information generator 214 sets a level of preference corresponding to the weighting value with respect to the program. A weighting value correction unit 212 adds or subtracts a correction value with respect to the weighting value to correct a weighting value for the program. A data collection and correction value generation unit 211 collects communication data via wired and/or wireless means and creates the correction value according to key data included in the communication data. The communication data is data fetched from at least one of a portable terminal and personal computer.

An embodiment will further be described with reference to the drawings.

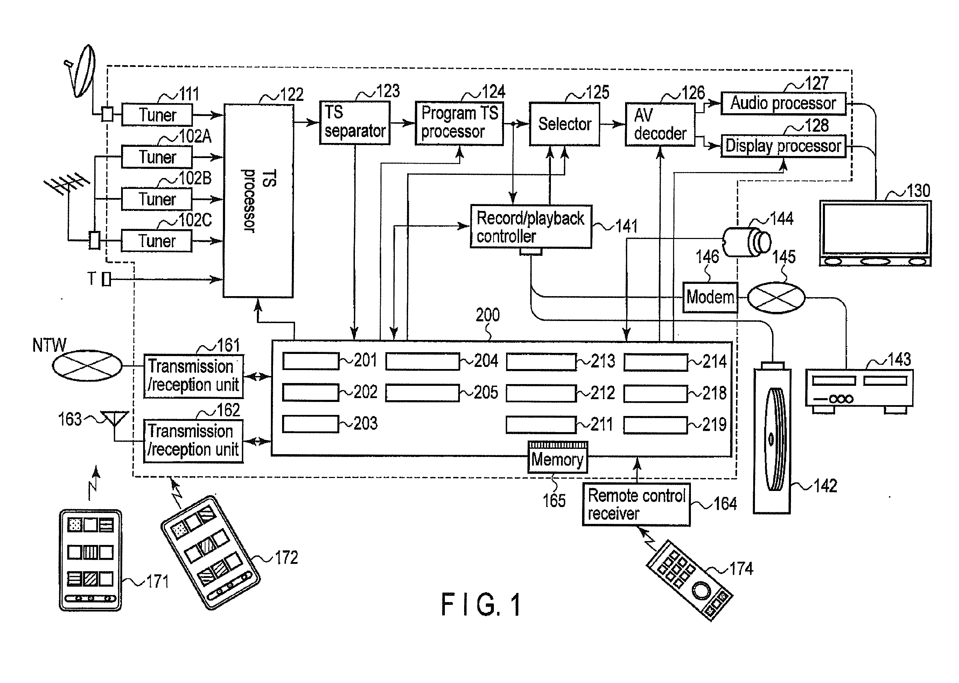

FIG. 1 is a block diagram showing a dialog type digital television receiver apparatus to which the present embodiment is applied.

The receiver apparatus includes a plurality of tuners 102A, 102B, 102C that receive encrypted (or scrambled) digital terrestrial broadcast signals, for example. For example, a tuner 111 is a tuner for Broadcasting Satellite (BS)/Communications Satellite (CS) digital broadcasting reception. In the drawing, four tuners are shown, but it is of course possible to increase the number of tuners.

Signals of broadcasting programs received by the tuners 102A, 102B, 102C and 111 are input to a TS processor 122 functioning as a re-multiplexing unit to re-multiplex Transport Streams (TSs) of plural channels (CH) into one TS.

In the TS output from the TS processor 122, packets of TSs of plural channels are time-divisionally multiplexed. Therefore, if the TS processor 122 is of a four-channel input type, for example, the arrangement of packets is time-divisionally multiplexed at a rate that is five times the rate of inputting to output a multiplexed TS. Then, a control information packet is embedded in the packet arrangement of the multiplexed TS. The control information packet carries control information such as time stamp information of multiplexed channel packets for respective channels, packet arrangement order information and the like.

The TS re-multiplexing system is not limited to the system described here and various methods can be used. The TS re-multiplexed in the TS processor 122 is supplied to a TS separator 123. The TS separator 123 separates an Entitlement Control Message (ECM) that is encoding information and an Event Information Table (EIT) that is a table in which event information such as a program name, performer, starting time and the like is described from a signal of a broadcasting program. Further, it separates electronic program guide (EPG) information or the like and supplies the same to a control device 200. The TS of the broadcasting program is supplied to a program TS processor 124.

In the program TS processor 124, decryption (or de-scramble) or the like is performed for a program stream related to a pay program. A key for decryption is generated by means of the control device 200. The control device 200 generates a key by using information included in ECM, contract information of a memory 165 and the like. A program stream related to a free program is passed without being decrypted.

A program TS output from the program TS processor 124 is supplied to a selector 125 and record/playback controller 141. The selector 125 selects a TS of a program which the user wants to view and supplies the same to an AV decoder 126. Video data included in a video packet of the program TS is encoded based on the Moving Picture Experts Group (MPEG) system, Advanced Video Coding (AVC) system or the like, for example. Further, audio data in an audio packet is encoded based on a Pulse Code Modulation (PCM) system, Dolby system, MPEG system or the like, for example. The AV decoder 126 separates a video packet of a program and an audio packet and decodes data items of the respective packets based on the corresponding systems.

The volume and quality of the decoded audio data are adjusted in an audio processor 127 and then the data is supplied to a speaker system. The picture quality, coloring, display scale, the number of lines, the resolution and the like of the decoded video data are adjusted in a display processor 128 and then the data is supplied to a display 130. Control data items for the audio processor 127 and display processor 128 are provided from the control device 200.

The record/playback controller 141 can supply the program TS from the program TS processor 124 to a hard disk drive 142 and/or disk record/playback apparatus 143. The hard disk drive 142 is always connected to the record/playback controller 141 and can record received broadcasting programs of plural channels for one to two months, for example. The disk record/playback apparatus 143 can play back removable disks such as DVD, BD or record signals on the disks. The disk record/playback apparatus 143 is connected to the record/playback controller 141 via a network (home network) 145 and modem 146 and can function as a home server.

A video camera 144 can photograph a viewer who views the display 130 and the surroundings thereof. A photographed signal can be managed for storage, playback and monitoring, at the control device 200.

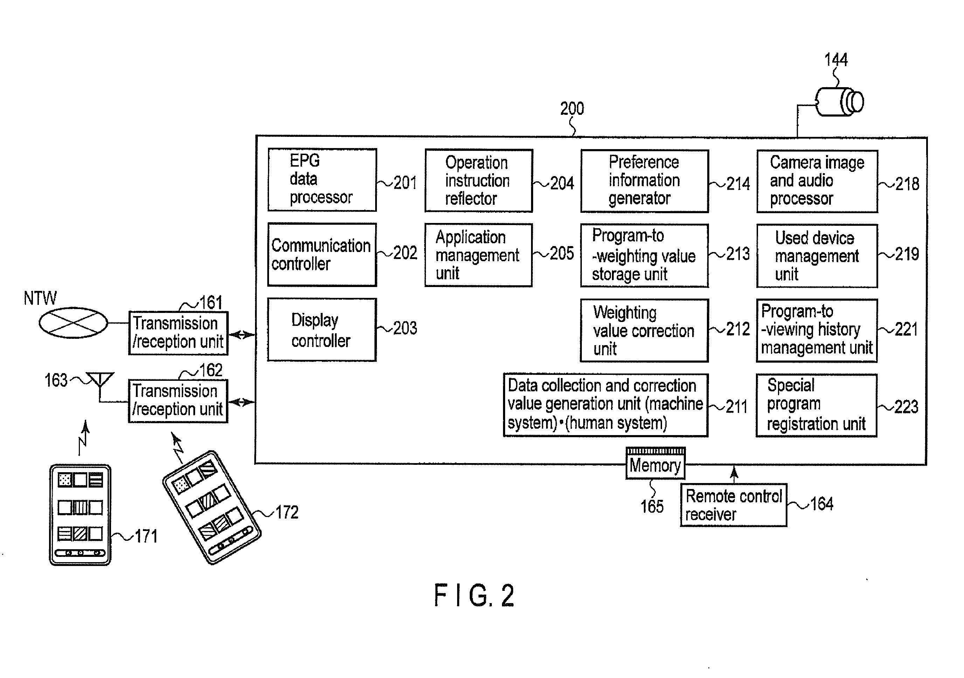

The control device 200 is explained with reference to FIG. 1 and FIG. 2.

The control device 200 includes an EPG data processor 201. By utilizing EPG data related to the past, present and future programs, the EPG data processor 201 can manage a program table related to programs already broadcast in the past and already stored in the hard disk drive 142, a program table related to programs that are now broadcast and a program table related to programs that will be broadcast in the future (approximately one month), in connection with one another.

Further, the EPG data processor 201 can add information inherent to the user or viewer to EPG data. The information inherent to the user or viewer may be described as follows, for example. When a broadcasting program is a movie, the information inherent to the user is information indicating that the user has purchased or orders a DVD or BD on which the movie is recorded. Further, when a broadcasting program is obtained by recording a concert of an orchestra, the information is information indicating that the user has purchased an appreciation ticket for the concert of the orchestra. The information items are information items collected by a data collection and correction value generation unit 211 that will be described later.

Further, the control device 200 includes a communication controller 202. The communication controller 202 controls input/output data of transmission/reception units 161, 162 and remote control receiver 164 connected to the control device 200.

The transmission/reception unit 161 can be connected to network NTW and, for example, connected to a server on the Internet. The transmission/reception unit 162 is used for short-distance radio communication and can communicate with portable terminals 171, 172 via an antenna 163. The transmission/reception unit 162 may communicate with the portable terminals 171, 172 via a relay (access point). In this case, wireless or wired communication can be performed if the transmission/reception unit 162 is connected to the relay. Further, although not shown in the drawing, a transmission/reception unit connected to the home network to which a home server is connected may be provided on the television receiver apparatus. As a portable terminal, a cellphone, personal computer, tablet computer, game console and the like can be used.

The remote control receiver 164 can receive an operation signal from a remote controller 174. The operation signal is analyzed in an operation instruction reflector 204. The control device 200 can reflect the operation corresponding to the operation signal to a system.

In this embodiment, the operation signal can be supplied to the control device 200 from the portable terminals 171, 172 via the transmission/reception unit 162.

The portable terminals 171, 172 can access the server via an Internet, base station not shown in the drawing or the like. Not only content provided by the server but also various applications and game software can be downloaded and transferred to the control device 200 via the transmission/reception unit 162. When content or application or game software is transferred from the portable terminal 171 or 172 to the control device 200, the communication controller 202 is operated. When content (for example, moving pictures) is transferred, the communication controller 202 provides the received content to the record/playback controller 141. The record/playback controller 141 can record the received content (moving picture) on the hard disk drive 142. In the hard disk drive 142, content is managed by use of a content file. When an application or game software (upgraded application, new application or new game software) is transferred from the portable terminal, the communication controller 202 supplies the received application or game software to the record/playback controller 141. The record/playback controller 141 can record the received application or game software on the hard disk drive 142. In the hard disk drive 142, the application and game software are managed by use of an application file and game software file.

The types and versions of the application and game software are also managed in an application management unit 205 in the control device 200. When menus of the application and game software are displayed, data of the application management unit 205 is utilized.

To-be-displayed menu screen data, program table screen data and the like are stored in or managed by means of a display controller 203. When the menu or program table is displayed, menu screen data or program table screen data is read from a data storage unit (memory or hard disk) and supplied to the display processor 128 under control of the display controller 203. As a result, the menu screen or program table screen is displayed on the display 130.

To-be-displayed menu screen data, program table screen data and the like can also be transmitted to the portable terminal 171 or 174. When the portable terminal 171 or 174 requests menu screen data, program table screen data or the like, the display controller 203 can transmit the menu screen data or program table screen data. The portable terminal 171 or 174 can display menu screen data or program table screen data on a touch panel screen and the user can give an operation instruction to the television receiver apparatus by touching an operation button displayed on the touch panel screen.

The control device 200 includes a data collection and correction value generation unit 211. The data collection and correction value generation unit 211 can generate a correction value of a weighting value for a program based on various operation data items (recording, playback, skip, erase, copying, programmed recording and the like) caused in the device and communication data fetched from the exterior. The weighting value and correction value are explained more in detail later. The correction value generated from the data collection and correction value generation unit 211 is used to correct the weighting value of the program by means of a weighting value correction unit 212. The corrected weighting value is transmitted to the program-to-weighting value storage unit 213 and stored therein.

The weighting value for the program is used when preference information (recommendable program list) for the program is generated in the preference information generator 214. The level of preference corresponding to the weighting value is set for the program. Then, for example, program names are arranged in the order of larger weighting values and can be displayed on the display 130 as a recommendable program list. The recommendable program list is updated once a day or once on every two or three days. The recommendable program list is transferred to the portable terminal in response to a request of the portable terminal and can be displayed on the display of the portable terminal. The user can perform the playback operation of a favorite program on the screen of the portable terminal.

The control device 200 includes a camera image and audio processor 218. The camera image and audio processor 218 can fetch image data from the camera 144, for example, and perform various processes according to an application. For example, the processing unit can identify a fetched face image of a viewer and create a table in which the face image and program information viewed by the viewer corresponding to the face image are related to each other. Further, the processing unit can fetch audio data from a microphone that is provided integrally with or separately from the camera 144 and analyze the same. For example, the processing unit can create a table in which a program name and scene obtained when the voice of the viewer (laughing voice) becomes loud are related to each other.

The control device 200 includes a used device management unit 219. The used device management unit 219 has a used device registration application and can start the used device registration application by means of a remote controller 174, for example. If the portable terminal 171 or 174 is operated or the hard disk drive 142 or disk record/ playback apparatus 143 is connected when the used device registration application is started, the above device can automatically be registered as a peripheral device.

Since the portable terminals 171, 174 have identification (ID) information, ID is registered as a peripheral device.

The data collection and correction value generation unit 211 is operated together with the communication controller 202 and has a function of detecting portable terminals present in the communication area. When detecting a portable terminal, the data collection and correction value generation unit 211 can request communication data remaining in the memory of the portable terminal. The communication data is blog data, mail data or retrieval data. In the memory of the portable terminal, trace (history) data of the operation of various content remains. Such history data includes identification data of the content. The history data is also collected as communication data by the data collection and correction value generation unit 211.

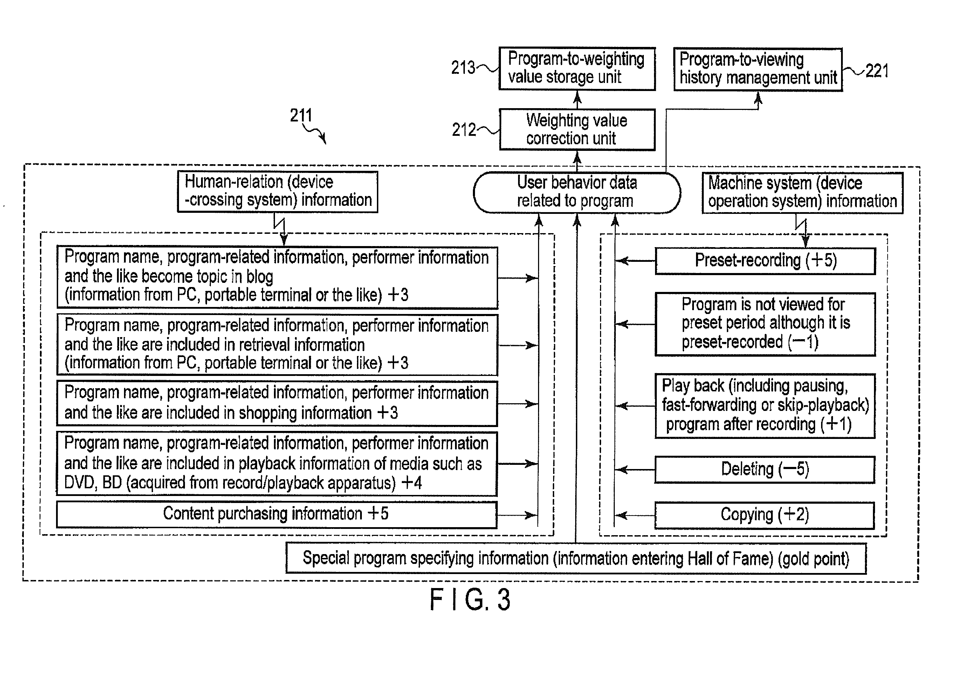

In FIG. 3, one of the characteristic configurations of the above apparatus is shown. The data collection and correction value generation unit 211 collects data of the user behavior related to the program and generates a correction value of a weighting value for the program. The user behavior can be classified into a machine system (that may also be referred to as a machine operation system) and a human-relation system (that may also be referred to as a device-crossing system or social system). The human-relation system corresponds to the operation of the user (portable terminal) who contacts a social medium (for communication) and performs a communication.

The machine system includes behaviors of preset-recording a program, not viewing (playing back) the program for a preset period (for example, within one week) although it is preset-recorded, playing back (including pausing, fast-forwarding or skip-playback) the program after recording, deleting the program or copying the program. The behaviors can be determined by identifying an instruction signal (instruction) input to the operation instruction reflector 204.

The data collection and correction value generation unit 211 determines the instruction signal and generates the following correction values (points), for example. When a certain program is preset-recorded, a point of ····+5 is generated. When a program is not viewed (played back) for a preset period (for example, within one week) although it is preset-recorded, a point of ····-1 is generated. When a program is played back (including being paused, fast-forwarded or skip-played back) after recording and then deleted, a point of ····+1 is generated. In the case of copying, a point of ····+2 is generated. The point, that is, a correction value is used to correct the weighting value of the program in the weighting value correction unit 212. The corrected weighting value is stored in the program-to-weighting value storage unit 213. The value of the point is not limited to the value shown here and it should be understood that it is presented only as one example. Further, the points may be more finely classified to generate plus points or minus points. By statistically collecting the points, the preference of the viewer for the program can be finely understood. Further, viewing history information for the program is collected and stored in a program-to-viewing history management unit 221. The viewing history is kept held for about one month or two months and then sequentially erased starting from the oldest one. When a viewer (user) recognition function is provided, the viewing history may be classified for each user.

Next, communication data is analyzed in the human-relation system and a correction value of a weighting value is generated. For example, the following points are generated. That is, a point (correction value) of ····+3 is generated when a program name, program-related information and performer information become the topic in the blog.

A point (correction value) of ····+3 is generated when a program name, program-related information and performer information are included in retrieval information.

A point (correction value) of ····+3 is generated when a program name, program-related information and performer information are included in retrieval information in shopping information.

A point (correction value) of ····+3 is generated when a program name, program-related information and performer information are included in retrieval information in playback information of media such as DVD and BD.

Further, a content purchasing example based on video-on-demand (VOD) is given as a content purchasing example. Further, there is a content purchasing example of CD, DVD, article and game. In order to collect the purchasing histories, for example, Internet access information (information related to URL) of the portable terminal (including a personal computer) is analyzed. Based on the analysis, various order information items and mail-order sales providers (for example, Amazon [registered trademark] or the like) are detected. Such purchasing information is effective when content in which the user is particularly interested is detected.

Therefore, when the above purchasing information (purchasing behavior) is detected, the maximum point (for example, +5) is generated.

Further, the above program-to-weighting value table may be classified for each identification (ID) information of the portable terminal. By making the classification, preferential information of the individual exclusively using the portable terminal can be more precisely formed.

Additionally, the database of face image data of performers and actors and the names thereof or the database of cars and the names of companies may be formed and the database may be used. For example, when face image data of a performer or actor is input to the data collection and correction value generation unit 211 from the external portable terminal, whether or not the input face image data is registered in the database is determined. If the input face image data is registered in the database, it is determined that the user is particularly interested in a program in which the performer or actor appears and the weighting value of the program may be increased. Also, in this case, a program-to-weighting value table classified for the respective portable terminals 171, 172 is formed. Further, a program-to-weighting value table classified for the respective users or respective portable terminals may be formed. Plural preference information items formed based on the above classification correspond to the respective users or respective portable terminals.

As described above, the present embodiment utilizes information of the machine system or human-relation system as the filtering method.

Generally, the percentage of users who view a program because they like the program is approximately 20%. The percentage of fans for a certain program is approximately 20%. In order to estimate the preference of the viewers of this type, the filtering method based on the machine system is suitably used.

However, it is often the case for the other viewers of approximately 80% to leave the television receiver apparatus on without particular aim. For example, the television receiver apparatus is set on without aim to display a program in many cases while the viewer is doing housework, performing the operation or sitting in a family circle. In order to estimate the preference of the viewers of this type, the filtering method based on the machine system cannot be suitably used.

Therefore, in the present embodiment, attention is paid to the fact that the user's behaviors are dispersed. That is, it is impossible to estimate the real preference of the user simply based on the user's behavior for a preset apparatus (for example, home television apparatus). In other words, the user's behavior is not performed only for the preset apparatus.

The user may communicate with social media and provide the topics of program names, performers and the like.

In the above embodiment, communication data is fetched and key data is extracted from the fetched data. Then, data (program name, the name of a performer of the program, face image data of the performer, program-related information) related to the program is detected. For example, the program-related information is a broadcasting station name, channel number, broadcasting time slot and the like. When data related to the program is detected, it can be estimated that the user is positively interested in the program. As a result, the preference of the user is emphasized based on the communication data. This resultantly leads to the fact that the preference (the preference that tends to be emphasized by the machine system) based on the behavior of the user who views a broadcasting program aimlessly is relatively suppressed.

In the above example, data items of the machine system (machine operation system) and human-relation system (device-crossing system or social system) are dealt with in parallel. However, the example is not limited to the above data processing method. If a program dealt with in the machine system is present in plural programs detected in the human-relation system, a process of increasing the weighting value may be additionally performed.

Various data classifying methods are provided and the method is not limited to the above classifying method. For example, the classifying method may be performed based on the relationship of the whole data, history data and preference data. The "whole data" is the entire information on the network, for example, and is data acquired from the program information, blog, tweet, network news or the like. The "history data" is data generated based on the behavior of the user and is data generated based on the type of a program that is played back or recorded or a medium that is related to the type of a corresponding program and purchased. The preference data is preference information obtained by adding a weighting value to a program corresponding to key data included in the "history data". Also, in this case, human-relation information is used.

The apparatus of the disclosure is not limited to the above embodiment. The camera image and audio processor 218 can identify a fetched face image of the viewer and form a table in which the face image and program information which the viewer of the face image has viewed are related to each other. Further, the processor can fetch audio data from a microphone that is provided integrally with or separately from the camera 144 and analyze the same. Therefore, it becomes possible to form preference information for each viewer.

However, when plural viewers are detected, it becomes possible to form common preference information. Further, when the voice of the viewer is recognized and the viewer laughs in a loud voice, an adding point for the program which the viewer views may be generated.

The weighting value may significantly increase and exceed a preset threshold value. Such a program can be dealt with as a special program (or a program entering a Hall of Fame). Program information of the program that enters a Hall of Fame and in which the weighting value exceeds a preset threshold value is registered in a special program registration unit 223. Further, when the program signal is recorded on the hard disk drive 142, for example, an erase inhibition flag is added.

The program name of the program that enters a Hall of Fame can be displayed on the display 130 by operating the portable terminal. Further, the program name of the program that enters a Hall of Fame can be read in response to a request signal from the portable terminal and displayed on the display of the portable terminal.

Program information of a program that enters a Hall of Fame can be registered in response to an operation signal from the portable terminal. The user sometimes wants to deal with a program in which the user himself appears or a program in which the user is particularly interested as a program that enters a Hall of Fame. The user can operate the portable terminal to display the program table in which the program name is described on the display 130, for example, or on the display of the portable terminal. Then, the user can operate a special program registration operation button to register a program in which the user himself appears or a program in which the user is particularly interested as a program that enters a Hall of Fame.

Information that enters a Hall of Fame is not limited to a program name and, for example, a personal name, performer name, article name or the like may be set.

The data collection and correction value generation unit 211 can generate a correction value of a weighting value according to collected data. However, the generation unit may sometimes refuse reception of collected data and may not generate a correction value of a weighting value. In order to perform the above operation, key data (keyword) used to refuse the reception is previously registered by means of the portable terminal. Key data used for refusing the reception is data that offends against social standards and is stored in the data collection and correction value generation unit 211.

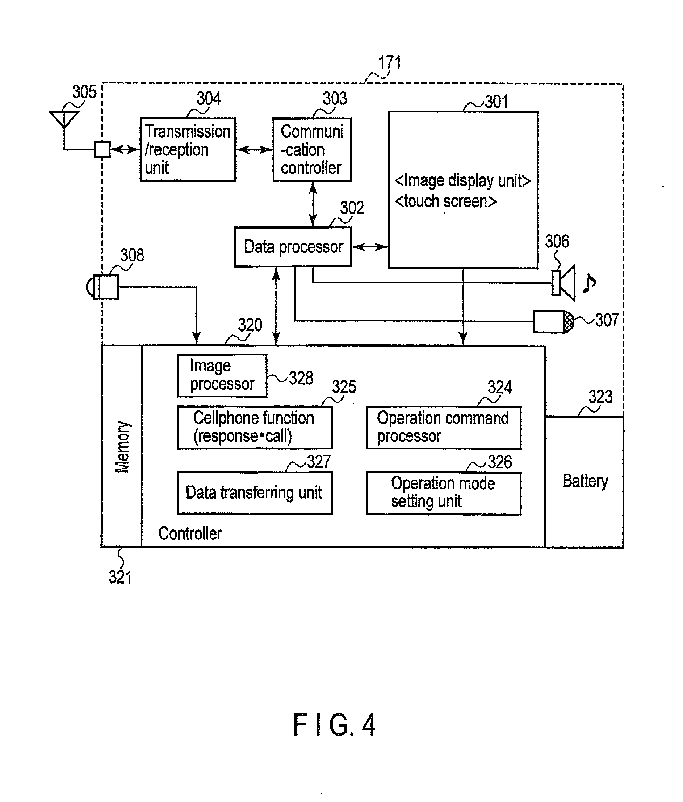

FIG. 4 shows an example of the internal configuration of the portable terminal 171. A display 301 is operated as an image display unit and can be operated as a touch screen. If the user touches a desired item when a menu screen is displayed, the operation input is recognized by means of an operation command processor 324 of a controller 320. For example, the touch operation is the operation input of selecting the phone function, an operation mode setting unit 326 sets the portable terminal 171 in a cellphone mode.

An operation screen for dial inputting is displayed on the display 301. If an operation for dial inputting of a desired address is performed, a cellphone functioning unit 325 transmits a call signal of a communication partner via a data processor 302, communication controller 303 and transmission/reception unit 304. When the line to the communication destination is set in a connection state, a signal from the communication partner is decoded via the transmission/reception unit 304, communication controller 303 and data processor 302. Then, voice data is output from a speaker 306. Voice data is processed by means of the data processor 302 via a microphone 307 and transmitted to the communication controller 303. Then, the data is transmitted as transmission data to the communication partner via the transmission/reception unit 304. A memory 321 is used to temporarily store data or store an application. 323 denotes a battery that is chargeable.

For example, the portable terminal 171 can download content or applications via an Internet. Further, the portable terminal can transfer the downloaded content or applications to the television receiver shown in FIG. 1, for example, based on control of a data-transferring unit 327. In this case, the portable terminal 171 apparently functions as a relay. Further, the portable terminal 171 can request a playback program with respect to the television receiver apparatus. Since the data amount of the playback program transmitted from the television receiver apparatus is relatively large for the portable terminal 171, the portable terminal 171 functions as a monitor without storing the playback program.

The portable terminal 171 can request image data of a program table, playback data of content and control screen data used for controlling the television receiver apparatus with respect to the television receiver apparatus. As the control screen data, for example, data of a menu screen, picture quality adjustment (resolution, luminance or the like) screen, color adjustment screen and volume adjustment screen is provided. When the control screen is obtained, the user can provide various adjustment inputs of the television receiver apparatus via the touch screen of the portable terminal. Further, adjustment data such as adjustment levels thereof can be stored in the memory 321 and used for the next adjustment operation and, for example, adjustment data can be provided with respect to another television receiver apparatus that is registered to be used.

The portable terminal 171 can download content from the external server or television receiver apparatus and display the same on the display 301. When content (moving pictures, photographs, letters, figures and the like) is displayed on the display 301 and if the user's finger touches the face (or the name) of a favorite performer, face image data is processed to be included in the communication data explained before. The user's finger may be moved to draw a circle and surround the face (or the name) of the performer on the screen. An object image is not limited to the face (or the name) of the performer and may be a favorite car or building of the user, a character string of figure in which the user is interested and the like. The operation input is processed by means of the operation command processor 324.

The portable terminal 171 has a short-distance communication function with respect to the television receiver apparatus of FIG. 1. That is, when the data collection and correction value generation unit 211 of the television receiver apparatus detects the portable terminal 171 and requests communication data remaining in the memory, the portable terminal 171 starts a data transferring unit 227 to transmit the communication data. Next, a portable terminal 197 deletes the already-transmitted communication data.

Various methods can be provided as means for transmitting communication data from the portable terminal 171 to the data collection and correction value generation unit 211 of the television receiver apparatus. For example, if the user himself operates the operation button of the portable terminal 171, communication data may be transmitted from the portable terminal 171 to the television receiver apparatus. Further, if the television receiver apparatus is operated by means of the portable terminal 171, communication data may automatically be transmitted to the television receiver apparatus.

As described above, in the present embodiment of the disclosure, history data based on the operation of the portable terminal and history data based on the operation of the television receiver apparatus are present as history data to collected.

Therefore, in this embodiment, history data items of various instruments present in a home can be separately or simultaneously transmitted to the management server. The portable terminal may transmit data to the management server or a television receiver apparatus 100 may transmit data to the management server. In this case, for example, if data in the program-to-viewing history management unit 221 is used, it is convenient. This is because human-relation system information and machine system information are collected in the data of the program-to-viewing history management unit 221. However, in this case, it is supposed that the weighting value is omitted.

The management server can utilize a characteristic detection program, characteristic analysis program and preference information creation program to provide adequate recommendable data to each home as service. The characteristic detection program allocates independent weight to the program, for example, by using viewing history data. For example, the weighting system of the respective items shown in FIG. 3 may be used or another weighting value may be set.

Next, the characteristic analysis program sets an independent preferential order, exception order or the like with respect to each program by using the weighting value and history data for the program. The preference information creation program refers to data of the preferential order and exception order and adds preferential orders, exception orders and the like to plural selected programs to create recommendable information, that is, preference information. The management server returns the created recommendable information to the portable terminal or television receiver apparatus.

Particularly, in the case of this embodiment, as described above, the portable terminal such as a smartphone or tablet computer is used for an auxiliary operation or developmental operation mainly related to content viewing of the television receiver apparatus with a large screen. Then, the operation history caused by using the portable terminal is collected as history data. Therefore, in the data collection and correction value generation unit 211, the viewing history of video content in the home is comprehensively collected based on various operations of plural instruments.

Also, in the above case, if plural portable terminals are used, the viewing history for each portable terminal may be independently collected. If the viewing history for each portable terminal is independently collected, preference information for each of the users having the respective portable terminals can be created.

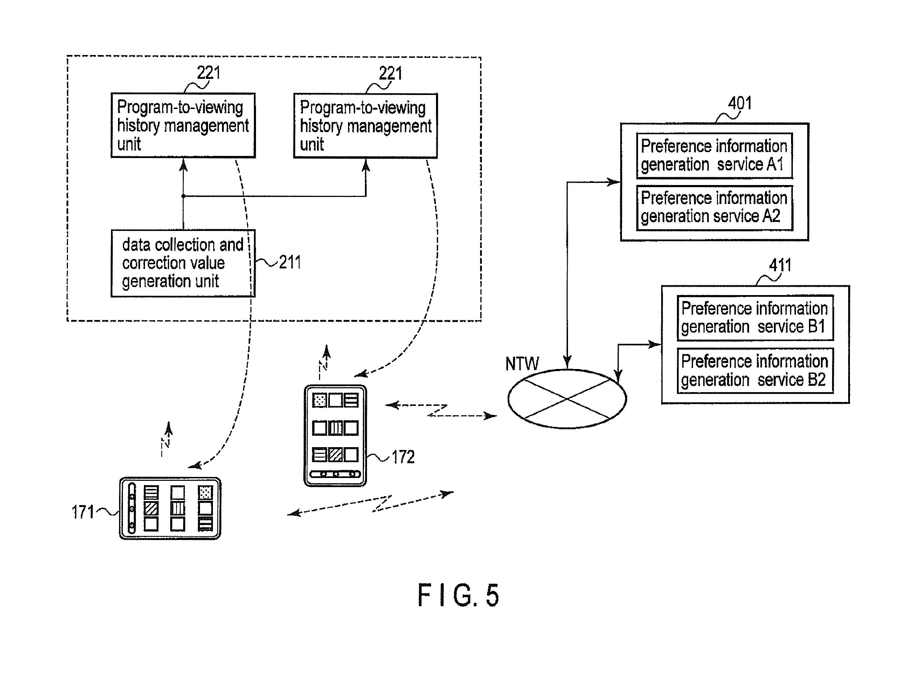

FIG. 5 shows an example in which exclusive program-to-viewing history management units 221, 221 for the portable terminals 171, 172 are provided. That is, FIG. 5 shows an example of the configuration that can commit creation of preference information (recommendable information) for each portable terminal to an external server. The portable terminals 171, 172 can request viewing history data in the program-to-viewing history management units 221, 221 to utilize the viewing history data items. The portable terminals 171, 172 can transmit independent viewing history data items to favorite servers 401, 411 and/or preference information creation services A1, A2, B1, B2 in the servers. The servers 401, 411 and/or preference information creation services A1, A2, B1, B2 in the servers create preference information by using received viewing history data and returns the same to the portable terminal 171 or 172.

Therefore, the portable terminals 171, 172 can acquire preference information items corresponding to the respective viewing history data items. Further, the portable terminals 171, 172 can acquire preference information items from favorite preference information creation services A1, A2, B1, B2. If the user of the portable terminal is dissatisfied with preference information acquired from preference information creation service A1, for example, he can acquire preference information from another preference information creation service A2, B1 or B2. The preference information may be stored in the portable terminal or stored in the television receiver apparatus for each portable terminal.

The technical terms used above in relation to the embodiments and the names or technical terms described in the drawings are in no way restrictive. For example, the processor may be replaced with processing means, a processing unit, or a processing module. Likewise, the controller may be replaced with control means, a control unit, or a control module. The managing unit may be replaced with a manager, managing means, or a managing module. The generator may be replaced with generating means, a generating unit, or a generating module. The storage unit may be replaced with storage means, a storage or a storage module. The collection and correction unit may be replaced with collection and correction means, or a collection and correction device. The registration unit may be replaced with registration means, a registration device, or a registration module.

Certain embodiments of this invention are explained, but these embodiments are presented only as an example and are not intended to limit the scope of this invention. The novel embodiments can be embodied in various other forms and various omissions, substitutions and changes can be made without departing from the spirit of the invention. The embodiments and the modifications thereof are included in the scope and spirit of the invention and included in the inventions described in the claims and in the scope of their equivalents.

## Claims

1. An information playback apparatus **characterized by** comprising:
a storage unit (213) configured to store weighting value of preference for program,
a preference information generator (214) configured to set a level of preference corresponding to the weighting value for the program,
a correction unit (212) configured to perform one of addition and subtraction operations of a correction value for the weighting value to correct the weighting value for the program, and
a data collection and correction value generator (211) configured to collect communication data via one of radio and wire and generate the correction value according to key data included in the communication data.

2. The information playback apparatus of claim 1, **characterized in that** the communication data is data fetched from at least one of a portable terminal and personal computer, and the key data coincides with or is similar to a word included in program information.

3. The information playback apparatus of claim 2, **characterized in that** the communication data is one of blog data, mail data, retrieval data, purchasing data and ordering data.

4. The information playback apparatus of claim 1, **characterized in that** the data collection and correction value generator (211) includes means for setting a keyword used for refusing reception of the correction value since the correction value is not generated.

5. The information playback apparatus of claim 1, **characterized in that** the data collection and correction value generator (211) includes means for issuing a request to a portable terminal for the communication data.

6. A control method for an information playback apparatus including a storage unit (213) configured to store weighting value of preference for program, a preference information generator (214) configured to set a level of preference corresponding to the weighting value for the program, and a correction unit (212) configured to perform one of addition and subtraction operations of a correction value for the weighting value to correct the weighting value for the program, **characterized by** comprising:
collecting communication data from one of a portable terminal and personal computer via one of radio and wire, and
generating the correction value according to key data included in the communication data.

7. The control method for the information playback apparatus of claim 6, **characterized in that** the communication data is one of blog data, mail data and retrieval data.
